Europäisches Patentamt

European Patent Office

Office européen des brevets

(19)

(11) Numéro de publication: **0 253 737**
**B1**

(12) **FASCICULE DE BREVET EUROPEEN**

(45) Date de publication du fascicule du brevet: **09.01.91**

(51) Int. Cl.⁵: **B 29 C 51/16**

(21) Numéro de dépôt: **87401667.8**

(22) Date de dépôt: **16.07.87**

(54) Procédé et dispositif de fabrication et de mise en place d'une étiquette sur un récipient thermoformé.

(30) Priorité: **16.07.86 FR 8610361**

(43) Date de publication de la demande:
**20.01.88 Bulletin 88/03**

(45) Mention de la délivrance du brevet:
**09.01.91 Bulletin 91/02**

(84) Etats contractants désignés:
**DE ES FR GB IT SE**

(56) Documents cités:
**DE-A-1 704 091**
**FR-A-1 593 083**
**FR-A-2 034 915**
**FR-A-2 403 177**
**FR-A-2 425 926**
**US-A-3 684 418**

(73) Titulaire: **ERCA HOLDING, S.A.R.L.**
**Zone Industrielle de Courtaboeuf Avenue du**
**Pacifique**
**F-91942 les Ulis Cedex (FR)**

(72) Inventeur: **Hautemont, Jean-Claude**
**18 Domaine de Miremont**
**F-91190 GIF-sur-Yvette (FR)**

(74) Mandataire: **Hasenrader, Hubert et al**
**Cabinet BEAU DE LOMENIE 55, rue**
**d'Amsterdam**
**F-75008 Paris (FR)**

**Description**

La présente invention concerne un procédé de fabrication et de mise en place simultanés de plusieurs étiquettes sur au moins une rangée de récipients thermoformés, et destiné à être appliqué à une installation de thermoformage simultané d'au moins une rangée de récipients, à partir d'une bande thermoplastique, du type comportant un bloc de moule mobile verticalement et muni d'au moins une rangée de chambres de formage ouvertes vers le haut et obturées en bas par un fond lorsque ledit bloc de moule se trouve en position haute de thermoformage; procédé selon lequel:

—on utilise autant de bandes individuelles à étiquettes qu'il y a de récipients par rangée de récipients à thermoformer simultanément dans lesdites chambres de formage;

—on détache au moins partiellement une étiquette de chaque bande individuelle;

—on transporte chaque étiquette au moins partiellement détachée dans la chambre de formage correspondante à travers une ouverture d'accès d'un pourtour qui est homothétique et légèrement supérieur à celui de l'étiquette, est pratiquée dans la paroi latérale de chaque chambre de formage et débouche sur la face latérale intérieure de ladite chambre, paroi alignée avec celle des autres chambres de la même rangée de chambres; et

—on maintient l'étiquette au voisinage de la face latérale inférieure de la chambre de formage jusqu'à ce qu'elle soit attachée au récipient lors du thermoformage de celui-ci.

Ce type de procédé est connu par exemple, par la demande de brevet allemand No. 1.704.091. Selon ce procédé on prévoit, pour chaque moule, une bande individuelle à étiquettes de laquelle on découpe une étiquette à l'aide d'une matrice constituée par le bord d'une ouverture d'accès pratiquée dans la paroi latérale d'un demi-moule et à l'aide d'un poinçon mobile transversalement, lorsque les deux demi-moules sont écartés l'un de l'autre pour laisser le passage au récipient qui vient d'être thermoformé et lorsque l'une des demi-moules porte contre la bande à étiquettes, le poinçon estampant alors une étiquette tout en la transférant vers la face latérale intérieure de la chambre de formage du demi-moule et en accompagnant dans cette position le demi-moule jusqu'au rapprochement complet des deux demi-moules. Cette manière de procéder présente de nombreux inconvénients parmi lesquels il convient de citer celui nécessitant le retour du poinçon dans sa position initiale assez éloignée de la position de rapprochement des deux demi-moules, avant que la bande à étiquettes soit libérée dudit poinçon et puisse être avancée d'un pas. Un autre inconvénient provient de l'estampage même des étiquettes au niveau de l'ouverture d'accès, ce qui produit après estampage une sorte de grille de déchet fragile qui en plus sert à transmettre à la bande à étiquettes l'effort de traction commandant l'avancement de ladite bande. Dans ce cas particulier, la bande à étiquettes se déplace suivant un trajet fixe et c'est le demi-moule qui s'approche de ce trajet pour permettre l'exécution de l'opération d'estampage.

Pour supprimer cet inconvénient au moins partiellement, on a proposé de rendre une partie du trajet de la bande solidaire d'un demi-moule et d'associer à celui-ci tous les moyens d'estampage des étiquettes (voir par exemple le brevet US—A—3 684 418). Cependant, là encore, on produit une grille de déchets fragile et le poinçon empêche tout avancement de la bande à étiquettes tant qu'il n'est pas revenu dans sa position initiale.

Un autre inconvénient des deux procédés connus doit être vu dans l'emploi de bandes individuelles à étiquettes, de sorte qu'en cas de thermoformage simultané de plusieurs récipients, un contrôle précis de l'avancement simultané d'un pas identique de toutes les bandes est difficile sinon impossible avec des moyens simples. Cet inconvénient a déjà été supprimée d'une façon générale par l'une ou l'autre des propositions similaires faites par exemple dans les brevets français 2 034 915 et 2 403 177 qui préconisent la réalisation des bandes individuelles à étiquettes à partir d'une bande-mère commune à plusieurs bandes individuelles et de déterminer le pas d'avance de toutes les bandes individuelles au niveau de la découpe de la bande-mère tout en associant aux bandes individuelles une paire de rouleaux d'avancement dont la longueur de déroulement est supérieure à celui du pas d'avance au niveau de la découpe de la bande-mère et qui commencent à patiner lorsqu'ils ont absorbé la longueur d'un pas d'avance déterminée par ladite bande-mère. On comprendra aisément que cette manière de procéder ne peut être appliquée aux bandes individuelles connues car les grilles de déchets résultant de l'estampage des bandes se déchireraient fréquemment. Ce procédé de contrôle connu ne peut être utilisé avec les moules se composant de deux demi-moules mobiles horizontalement et encore moins avec les moules qui sont mobiles verticalement et dont les chambres de formage sont ouvertes vers le haut et comportent un fond fixe ou verticalement mobile et en tout cas, indépendant de la paroi latérale des chambres de formage, du fait que dans tous ces systèmes connus la longueur du trajet d'une bande individuelle compris entre la zone de découpe de la bande-mère et la paire de rouleaux d'avancement de la bande individuelle associée à une chambre de formage, varie entre deux valeurs extrêmes correspondant à la position supérieure de formage et à la position inférieure de démoulage.

Encore un autre inconvénient majeur des procédés connus doit être vu dans le fait qu'ils ne permettent pas la fabrication de deux rangées de récipients rapprochées à partir d'une bande thermoplastique horizontale qui se déplace pas à pas dans une direction perpendiculaire au plan passant par les axes des récipients d'une rangée de récipients.

La présenté invention a pour but de supprimer les inconvénients susmentionnés et de rendre le procédé du type initialement décrit applicable à une installation de thermoformage simultané d'au moins une rangée de récipients à partir d'une bande thermoplastique, installation du type comportant un bloc de moule mobile verticalement et muni d'au moins une rangée de chambres de formage ouvertes vers le haut et obturées en bas par un fond lorsque ledit bloc de moule se trouve en position haute de thermoformage.

Dans un procédé de fabrication et de mise en place simultanés de plusieurs étiquettes sur au moins une rangée de récipients thermoformés, du type initialement décrit, ce but est atteint conformément à l'invention du fait que:

—l'on découpe les bandes individuelles à étiquettes d'une bande-mère en une largeur identique à celle de l'étiquette et l'on détermine la longueur du pas d'avance de chaque bande individuelle à l'endroit de la découpe longitudinale de la bande-mère en bandes individuelles tout en maintenant tendue chaque bande individuelle au moins entre deux pas d'avance successifs;

—on maintient constante la longueur des tronçons de chaque bande individuelle compris entre l'endroit de découpe longitudinale et l'entrée de la bande individuelle dans l'ouverture d'accès de la chambre de formage correspondante malgré le déplacement vertical du bloc de moule muni desdites chambres;

—on guide le tronçon de bande en aval d'une paire de rouleaux d'introduction disposée en dessous d'une paroi extérieure longitudinale du bloc de moule au niveau d'une chambre de formage, à travers une fente de guidage verticale débouchant dans le fond de l'ouverture d'accès et l'on avance ledit tronçon de bande jusqu'à ce qu'une étiquette occupe complètement la section verticale de l'ouverture d'accès; et

—finalement, on sépare complètement du reste de la bande individuelle, le bord inférieur de l'étiquette occupant l'ouverture d'accès.

Grâce à cette manière de procéder, aucune chute n'est produite au niveau de l'ouverture d'accès et les éléments en mouvement au niveau de cette ouverture d'accès peuvent être fortement réduits. En outre, les éléments prévus au niveau de l'ouverture d'accès n'exécutent que des mouvements limités et sont peu encombrants dans le sens perpendiculaires au plan contenant les axes des récipients d'une même rangée de récipients, de sorte que l'écartement latéral entre deux rangées de récipients successives peut rester assez faible.

L'invention concerne aussi un dispositif de fabrication et de mise en place d'une étiquette sur un récipient thermoformé à partir d'une bande thermoplastique du type comprenant dans un poste de thermoformage simultané d'au moins une rangée de récipients:

—au moins une rangée de chambres de formage ouvertes vers le haut, associées chacune à un fond séparé de celle-ci et ménagées dans un bloc de moule verticalement mobile par rapport au fond de chambre entre une position haute de thermoformage dans laquelle les fonds obturent l'extrémité inférieure desdites chambres et une position basse de démoulage dans laquelle l'ouverture supérieure des chambres se trouve en dessous des fonds et dans laquelle la rangée de récipients thermoformés peut être avancée d'un pas dans une direction perpendiculaire au plan contenant les axes des récipients d'une même rangée de récipients, une ouverture d'accès étant pratiquée dans la paroi latérale de chaque chambre de formage, paroi alignée avec celle des autres chambres de la même rangée de chambres, de telle sorte que ladite ouverture d'accès débouche sur la face latérale intérieure de ladite chambre;

—un plateau de support verticalement mobile supportant le bloc de moule et associé à des moyens de commande lui imprimant un mouvement alternatif vertical entre une position haute de thermoformage et une position basse de démoulage;

—une bande individuelle à étiquettes par chambre de formage, cette bande étant guidée sur son trajet vers la chambre de formage à l'aide d'au moins un rouleau de renvoi et de guidage et d'une paire de rouleaux d'introduction disposé en amont de l'ouverture d'accès; et

—des moyens de découpe au moins partielle des étiquettes pour faciliter le détachement des étiquettes de leur bande individuelle.

Ce genre de dispositif est par exemple connu par le brevet français 2 256 013. Dans ce cas, l'ouverture d'accès présente la forme d'une fente de passage à travers laquelle est introduite l'étiquette qui présente dans ce cas particulier, la forme d'une banderole faisant le tour complet de la face intérieure cylindrique de la chambre de formage. Ce dispositif ne permet pas la mise en place d'étiquettes non cylindriques, de préférence planes ou seulement peu incurvées sur une fraction du pourtour d'un récipient.

Comme précédemment mentionné, la demande de brevet allemand 1 704 091 montre un dispositif de fabriction et de mise en place d'une étiquette plane ou faiblement incurvée sur une partie de la paroi latérale d'un récipient thermoplastique, ce dispositif étant associé à un bloc de moule verticalement mobile entre une position haute de thermoformage et une position basse de démoulage. Cependant, dans ce cas les étiquettes sont fabriquées d'avance et une pile d'étiquettes est logée dans un évidement latéral ménagé dans le bloc de moule et débouche sur une face latérale de la chambre de formage, un piston poussoir également disposé dans ledit évidement avançant la pile d'une épaisseur d'étiquette après chaque formage d'un récipient, de sorte qu'une étiquette nouvelle se présente à la face latérale de la chambre de formage et puisse être surmoulée par le récipient lors du thermoformage de celui-ci. Un inconvénient majeur de ce mode de réalisation réside dans le fait que plusieurs étiquettes peuvent rester collées l'une sur l'autre lors du thermoformage d'un récipient et lors de l'adhésion de la première étiquette sur une paroi latérale de celui-ci. Il arrive également qu'une étiquette tombe dans le fond de la chambre de formage et soit surmoulée par le récipient en cette position.

Cette demande de brevet allemand 1 704 091, de même que le brevet US—A—3 684 418 montrent aussi un dispositif de fabrication d'étiquettes à partir d'une bande à étiquettes et de mise en place d'une étiquette sur un récipient thermoformé. La structure de ces dispositifs et les inconvénients de ces derniers ont déjà été indiqués précédemment lors de la discussion des procédés connus de fabrication et de mise en place d'étiquettes.

La présente invention a également pour but de proposer un dispositif de fabrication et de mise en place d'étiquettes sur des récipients thermoformés, dispositif qui est du type ci-dessus défini et qui évite les inconvénients critiqués.

A cet effet, le dispositif de fabrication et de mise en place d'étiquettes sur des récipients thermoformés précité est caractérisé

—en ce que l'ouverture d'accès présente en coupe verticale un pourtour homothétique et légèrement supérieur à celui d'une étiquette plane, comprend une face supérieure constituant une butée de fin de course pour l'extrémité libre de la bande à étiquettes et est raccordée à l'extérieur au moyen d'une fente de guidage pratiquée dans la paroi latérale du bloc de moule, débouchant sur la face inférieure de l'ouverture d'accès près de la face intérieure de la chambre de formage et destinée à recevoir la partie extrême de la bande individuelle à étiquettes;

—que les rouleaux de renvoi et les paires de rouleaux d'introduction sont montés sur le plateau de support du bloc de moule, la zone de contact entre les deux rouleaux de chaque paire de rouleau d'introduction étant prévue en face de l'entrée dans la fente de guidage et en alignement avec celle-ci;

—que les moyens de découpe au moins partielle des étiquettes d'une bande à étiquettes sont prévus dans une zone comprise entre la paire de rouleaux d'introduction et l'embouchure de la fente de guidage dans l'ouverture d'accès, et

—qu'il comporte, en outre,

—un rouleau de stockage de bande-mère monté dans des paliers à poste fixe,

—une unité de découpe longitudinale de la bande-mère en bandes individuelles à étiquettes d'une largeur égale à celle des étiquettes,

—un plateau de support sur lequel est installée l'unité de découpe longitudinale et qui est monté mobile en synchronisme avec les mouvements de courses verticales du plateau de support du bloc de moule, des paires de rouleaux d'introduction et des rouleaux de renvoi et de guidage; ainsi qu'

—un rouleau de tension prévu sur le trajet du tronçon de bande-mère entre le rouleau de stockage et l'unité de découpe longitudinale, ce rouleau de tension étant appliqué contre la bande-mère de façon à composer les variations de longueur dudit tronçon de bande-mère dues aux déplacements de l'unité de découpe longitudinale.

Grâce à cette conception, on réalise un dispositif de fabrication et de mise en place des étiquettes sur les récipients thermoformés simultanément en au moins une rangée de récipients à partir d'une bande thermoplastique sans qu'il y ait un problème d'évacuation des chutes et sans que les intervalles entre deux récipients successifs dépendent de l'encombrement des différents organes ou éléments constitutifs du dispositif conforme à l'invention.

D'autres avantages et caractéristiques de l'invention ressortiront de la description suivante de plusieurs modes de réalisation du dispositif selon l'invention, cette description étant faite en référence aux dessins annexés sur lesquels:

—la figure 1 est une vue en élévation d'une coupe verticale du dispositif selon l'invention, selon la ligne I—I de la figure 2,

—la figure 2 est une vue schématique en plan du dispositif selon l'invention,

—la figure 3 est une vue en plan d'une coupe horizontale montrant un détail du dispositif, selon la ligne III—III de la figure 1,

—la figure 4 est une vue schématique en plan d'une coupe horizontale montrant un autre détail du dispositif, selon la ligne IV—IV de la figure 1,

—la figure 5 est une vue frontale en élévation du détail selon la figure 4,

—la figure 6 est une vue en élévation d'une coupe verticale similaire à celle de la figure 1, mais montrant encore une autre variante,

—la figure 7 est une vue en plan d'une bande individuelle à étiquettes ayant différentes formes d'étiquette et différents moyens de liaison entre étiquettes successives,

—la figure 8 est une vue schématique latérale en élévation du dispositif selon la figure 1,

—la figure 9 est une vue schématique latérale en élévation d'un autre mode de réalisation du dispositif selon l'invention,

—la figure 10 est une vue en élévation partiellement en coupe d'un détail suivant la ligne X—X des figures 9 et 11, et

—la figure 11 est une vue latérale en élévation partiellement en coupe d'un détail, suivant la ligne XI—XI.

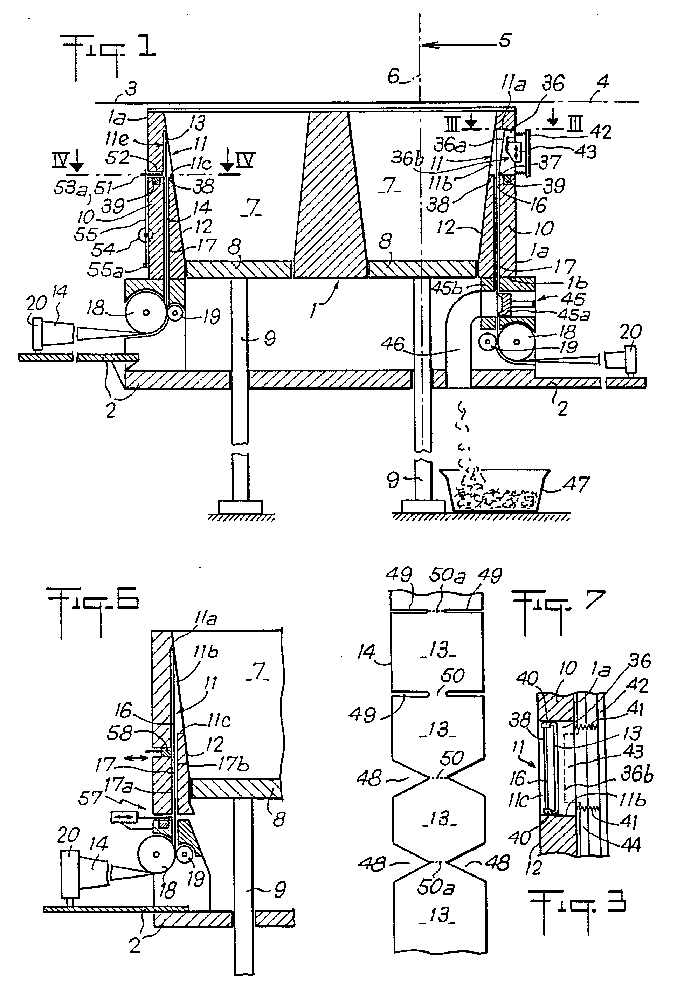

Tel que représente, sur les dessins, le dispositif de fabrication et de mise en place des étiquettes sur au moins une rangée de récipients thermoformés comprend, dans un poste de thermoformage, un bloc de moule 1 monté au-dessus de et sur un premier plateau horizontal de support 2 animé d'un mouvement alternatif vertical de monte et de baisse, de sorte que le bloc de moule 1 est également mobile avec ledit plateau 2 entre une position haute dite de thermoformage et une position basse dite de démoulage des récipients thermoformés. Les récipients sont réalisés à partir d'une bande thermoplastique 3 se déplaçant dans un plan horizontal 4 et contre laquelle vient porter par en dessous la face supérieure du bloc de moule 1 lorsqu'il occupe sa position haute (voir figure 1), cette bande 3 se déplaçant horizontalement en direction de la flèche 5 perpendiculairement au plan 6 défini par les axes des récipients d'une rangée de récipients thermoformés.

Le bloc de moule 1 comprend au moins une rangée de chambres de formage 7 (deux rangées de chambres de formage selon le mode de réalisation représenté sur les dessins) qui sont ouvertes vers le haut et sont associées chacune à une plaque de fond horizontale 8 séparée du bloc de moule 1 et montée sur une tige verticale de support fixe 9, qui traverse avec un certain jeu latérale le plateau de support 2. La longueur de course verticale du bloc de moule 1 avec son plateau 2 est telle qu'en position haute du bloc de moule 1, les fonds ou plaques de fond 8 obturent l'extrémité inférieure des chambres de formage 7 qui présentent ici la forme d'un tronc de pyramide inversé ou d'un tronc de cône inversé et qu'en positoin basse, l'ouverture supérieure des chambres 7 se trouve en dessous des plaques de fond fixes 8.

Dans la paroi latérale extérieure 10 du bloc de moule 1, paroi commune à toutes les chambres 7 d'une même rangée de chambres, est prévue en face de chaque chambre de préférence près de l'ouverture supérieure de celle-ci, une ouverture d'accès 11 qui débouche sur une face latérale 12 de la chambre 7 et qui présente, en coupe verticale parallèle à la face verticale longitudinale 1a du bloc de moule 1, un pourtour homothétique et légèrement supérieur à celui de l'étiquette plane 13. Cette ouverture d'accès 11 dont l'axe est de préférence perpendiculaire à ou fortement incliné par rapport à l'axe vertical de la chambre de formage 7, possède une face supérieure 11a constituant une butée de fin de course pour l'extrémité libre d'une bande individuelle à étiquettes 14 qui, comme on le verra ci-après, est découpée longitudinalement d'une bande-mère 15. Les faces latérales 11b de l'ouverture d'accès s'étendent verticalement et sont écartées l'une de l'autre d'une distance légèrement supérieure à la largeur de l'étiquette et la face inférieure 11c de ladite ouverture d'accès 11 comporte l'embouchure supérieure 16 d'une fente de guidage 17 de section transversale rectangulaire adaptée à la largeur et à l'épaisseur de la bande à étiquettes 14. Cette fente de guidage 17 s'étend de préférence verticalement dans la paroi latérale 10 du bloc de moule 1 et débouche dans le cas représenté sur la face inférieure horizontale 1b du bloc de moule 1.

En dessous de la fente de guidage 17 est prévue une paire de rouleaux d'introduction 18, 19 d'axes horizontaux, la bande à étiquettes 14 étant pincée entre les rouleaux 18, 19 de ladite paire de rouleaux dont la zone de contact se trouve dans l'alignement de la fente de guidage 17. Chaque paire de rouleaux d'introduction 18, 19, ainsi que les différents rouleaux de renvoi et de guidage 20 d'axe vertical et associés à une bande individuelle à étiquettes 14 sont montés dans des paliers solidaires du plateau de support 2.

Chaque bande individuelle à étiquettes 14 est découpée longitudinalement d'une bande-mère 15 contenant plusieurs bandes individuelles non découpées. Comme on peut le voir notamment sur les figures 2 et 8, cette bande-mère 15 est déroulée d'un rouleau de stockage 21 à axe horizontal monté dans des paliers à poste fixe 22 et disposé à une certaine distance latérale du bloc de moule 1, de sorte que son axe soit parallèle au sens de déplacement 5 de la bande thermoplastique 3. Le tronçon de bande-mère 15 soutiré du rouleau de stockage 21 passe d'abord devant un rouleau de tension 23 porté par l'extrémité d'un bras de levier pivotant 24 dont l'autre extrémité 25 est articulée à poste fixe, avant de parvenir à une unité de découpe longitudinale 26 qui comprend un rouleau presseur inférieur à lames annulaires 27 et un rouleau presseur supérieur à contre-lames annulaires 28 et le cas échant, un rouleau de renvoi 29 portant contre le rouleau presseur supérieur 28, la bande-mère 15 passant entre ces trois rouleaux 26, 27, 28, de façon à entourer le rouleau presseur supérieur 28 d'un angle au moins égal à 180°. C'est le rouleau inférieur 27 qui est entraîné pas à pas et qui détermine la longueur des pas d'avance simultanément pour toutes les bandes individuelles 14 quittant l'unité de découpe longitudinale 26 après avoir été découpées longitudinalement à la largeur égale à celle des étiquettes 13. La structure de l'unité de découpe 26 est en principe connue par exemple par les brevets français 2 034 915 et 2 403 177, de sorte qu'on pourrait s'y rapporter en cas de besoin. Les axes des rouleaux 27, 28, 29 de l'unité de découpe longitudinale 26 sont horizontaux et parallèles à la direction d'avancement 5 de la bande thermoplastique 3, de sorte que les bandes individuelles 14 quittant ladite unité 26 se situent dans un plan horizontal tangent aux deux rouleaux 27, 28. Sur leur trajet vers les chambres de formage 7, les bandes individuelles 14 doivent être vrillées deux fois de 90° pour pouvoir être amenées chacune dans l'ouverture d'accès correspondante 11, Un premier vrillage de 90° est réalisé entre la sortie de l'unité de découpe longitudinale 26 et la première rangée de rouleaux de renvoi d'axe vertical 20, ces rouleaux 20 étant situés au niveau du prolongement horizontal de la bande individuelle 14 quittant l'unité 26 se trouvent à une distance de sortie de cette unité 26 qui est égale à au moins huit fois la largeur de la bande individuelle 14.

Il est à noter que cette rangée de rouleaux de renvoi et de guidage située en aval de la sortie de l'unité de découpe longitudinale 26 ainsi que celle-ci sont montées sur un même plateau du support qui est mobile verticalement en synchronisme avec les mouvements de courses verticales du plateau de support 2 du bloc de moule 1. Selon le mode de réalisation représenté sur les figures 1, 2 et 8, le plateau de support de l'unité de découpe longitudinale 26 et celui du bloc de moule 1 sont rigidement liés l'un à l'autre de façon à ne former qu'un seul et unique plateau de support 2.

Mais le plateau de support de l'unité de découpe longitudinale 26 au lieu d'être soit intégré dans le plateau 2 du bloc de moule 1, soit indépendant de celui-ci tout en se déplaçant verticalement en synchronisme avec ledit plateau 2, pourrait encore être réalisé de façon différente tout en respectant la condition selon laquelle la longueur du trajet de chaque bande individuelle 14 entre, d'une part, la sortie de l'unité de découpe longitudinale 26 ou d'une unité assurant et déterminant la longitudinale 26 ou d'une unité assurant et déterminant la longueur d'avance de chacune des bandes individuelles, et, d'autre part, la paire correspondante de rouleaux d'introduction 18, 19 reste constante malgré les déplacements verticaux du bloc de moule 1, et des différentes paires de rouleaux d'introduction montés sur le même plateau de support 2.

Selon le mode de réalisation représenté sur les figures 9, 10 et 11, le plateau de support 30 de l'unité de découpe longitudinale 26 et de la première rangée de rouleaux de renvoi et de guidage 20 d'axes verticaux est réalisé sous la forme générale d'un cadre qui est mobile à la fois en pivotement autour d'un axe horizontal fixe 31 situé à l'arrière et au voisinage de l'unité de découpe longitudinale 26 et en translation parallèlement à son étendue longitudinale. A cet effet, les longerons 30a du cadre 30 sont articulés à leur extrémité frontale située au voisinage du bloc de moule 1 sur le plateau de support 2 de celui-ci par l'intermédiaire de flasques verticaux 2a et de deux axes horizontaux alignés 32 portés à la fois par les flasques 2a du plateau de support 2 et par les paliers prévus aux extrémités frontales des longerons 30a du cadre 30. L'extrémité frontale 30e de chaque longeron 30a du cadre support 30 est coudée et, à sa partie inférieure, est solidaire d'une traverse frontale 30b qui se trouve au niveau du plateau de support 2 du bloc de moule 1 et qui porte la première rangée de rouleaux verticaux de renvoi 20 dont la hauteur est environ le double de la distance verticale entre ladite traverse 30b et les axes d'articulation 32 du cadre 30 sur les flasques verticaux 2a du plateau de support 2. Comme les autres rouleaux de renvoi 20 sont montés sur le plateau de support 2, leur partie centrale se trouve également au même niveau que les axes d'articulation 32.

L'axe d'articulation 31 de l'extrémité arrière du cadre de support 30 qui comporte aussi des flasques à paliers 33 pour les arbres 27a, 28a, 29a des rouleaux (27, 28, 29 de l'unité de découpe longitudinale 26, est monté dans un palier fixe 34 et se trouve dans un plan horizontal 35 contenant également la partie médiane des rouleaux de renvoi 20 et les axes d'articulation 32 entre le plateau de support 2 et le cadre de support 30, lorsque le bloc de moule 1 et, par conséquent, son plateau de support 2, se trouvent à mi-distance entre leur position haute de thermoformage et leur position basse de démoulage. L'extrémité arrière des longerons 30a du cadre de support 30 qui dépasse d'une traverse arrière 30c est munie d'une échancrure oblongue 30d qui coiffe l'axe d'articulation fixe 31, de sorte que le cadre de support 30 peut pivoter autour de cet axe 31 vers le haut et vers le bas et avancer ou reculer par rapport à cet axe fixe 31, lorsque le bloc de moule 1, et donc l'extrémité frontale du cadre de support 30 relié au plateau de support 2, se déplace vers sa position haute de thermoformage ou la position basse de démoulage. Il est à noter que, compte tenu de la structure du mode de réalisation décrit en référence aux figures 9 à 11, le cadre de support 30 se trouve dans la position la plus reculée par rapport à l'axe fixe 31, lorsque le bloc de moule 1 est à mi-distance entre ses positions haute et basse dans lesquelles ledit cadre 30 est dans la position la plus avancée par rapport audit axe fixe 31.

D'autres modes de réalisation sont possibles en ce qui concerne le plateau de support 30 pour l'unité de découpe longitudinale 26 et la liaison entre ledit plateau 30 et le plateau de support 2 du bloc de moule 1. A cet effet, on pourrait aussi se rapporter aux modes de réalisation décrits dans la demande de brevet français No. 86 08 295 déposée le 9 juin 1986 par le même Déposant, ces modes de réalisation étant d'ailleurs incorporés à la présente demande de brevet par voie de référence.

Lorsque l'étiquette 13, qui se trouve à l'extrémité libre de la bande à étiquettes 14, a été introduite à travers la fente verticale de guidage 17 dans l'ouverture d'accès 11, elle doit être détachée de ladite bande 14 pour pouvoir être évacuée avec le récipient thermoformé après y avoir été attachée par thermoformage.

Un premier moyen de séparation d'étiquette est représenté sur la figure 1 côté droit supérieur et sur la figure 3.

Ce premier moyen de séparation comprend un piston poussoir 36 logé derrière l'embouchure 16 de la fente de guidage 17 dans un prolongement de l'ouverture d'accès 11 qui débouche alors non seulement sur la face intérieure 12 de la chambre de formage 7, mais aussi sur la face latérale extérieure 1a du bloc de moule 1. Ce piston poussoir 36 présente une arête frontale inférieure coupante 37 susceptible de coopérer avec l'arête opposée 38 de l'embouchure 16 de la fente 17 pour séparer de la bande à étiquettes 14 la première étiquette 13 contenue dans l'ouverture d'accès 11 et pour faire avancer légèrement l'étiquette découpée en direction de la chambre de formage. Bien entendu, pour éviter que l'étiquette découpée ne tombe dans la chambre de formage 7, il est avantageux de procéder à la découpe de ladite étiquette qu'après avoir commencé l'opération de thermoformage du récipient et avoir attaché au moins la partie supérieure de l'étiquette à la matière thermoplastique du récipient en cours de formage.

La face frontale 36a du piston poussoir 36 peut présenter la même inclinaison que la face latérale 12 de la chambre de formage 7, de sorte que la face latérale 12 et la face frontale 36a du piston poussoir 36 soient pratiquement alignées après l'avancement de celui-ci par dessus l'embouchure 16.

Afin d'assurer une découpe parfaite de l'étiquette 13, le piston poussoir 36, et notamment son arête coupante 37, doit être appliqué sans jeu contre la face horizontale inférieure 11c de l'ouverture d'accès 11. Il est avantageux d'utiliser à cet effet un piston poussoir en fer ou en acier et une barrette d'aimant permanent 39 noyée dans la paroi 10, de façon qu'une de ses faces se trouve à fleur avec la face inférieure 11c de l'ouverture d'accès 11.

Les bords latéraux de la face frontale 36a du piston poussoir 36 peuvent être munis de glissières de guidage 40 qui présentent une section en U et sont ouvertes vers le bas, le cas échéant vers le haut, et également en direction de l'autre glissière 40. En position d'attente du piston poussoir 36, l'extrémité inférieure de ces glissères de guidage 40 se trouve juste au-dessus des bords latéraux de l'embouchure 16 de la fente de guidage 17 de sorte que l'extrémité supérieure de la bande 14 sortant de la fente 17 soit aussitôt saisie latéralement par les glissières de guidage 40 et appliquée contre la face frontale 36a du piston poussoir 36.

A sa face arrière, le piston poussoir 36 est relié à des moyens élastiques de rappel 41 tels que des ressorts de traction dont une extrémité est accrochée à un appui de référence tel qu'une plaquette de fixation 42 portée par le bloc de moule 1 à une faible distance de la face verticale extérieure 1a de celui-ci. Bien entendu, cet appui de référence pourrait également être constitué par des tiges d'appui, d'une part, ancrées dans la face verticale 1a du bloc de moule 1 et, d'autre part, présentant à une faible distance de celle-ci un crochet sur lequel s'accroche l'extrémité libre du ressort de rappel correspondant 41. Entre la face arrière du piston poussoir 36 et l'appui de référence 42 peut être prévu un organe d'actionnement 43 tel qu'un doigt porté par une barre transversale 44 disposée entre la face verticale 1a du bloc 1 et l'appui de référence 42, cette barre 44 pouvant être animée d'un mouvement alternatif vertical de sorte que le doigt 43 qui lui est solidaire s'applique contre une rampe 36b prévue sur la face arrière du piston poussoir 36 et chasse celui-ci en direction de la chambre de formage 7 ou lui permet d'être rappelé en position de retrait derrière l'embouchure 16 sous l'effet des ressorts de rappel 41.

Dans certains cas, il est avantageux d'utiliser des étiquettes ayant une forme différente d'une forme rectangulaire. D'un autre côté, il convient cependant de laisser aux bandes individuelles 14 une certaine résistance à la traction qui, entre autres, dépend de la largeur de la bande 14. Comme, en plus, le tronçon de bande à étiquettes compris entre l'unité de découpe longitudinale 26 et la paire de rouleaux d'introduction 18, 19 peut être soumis à des à-coups de tension du fait que la longueur d'un pas d'avance de la bande 14 est déterminée par l'unité de découpe longitudinale, que cette longueur de bande est avancée par des rouleaux d'introduction 18, 19 dont le pourtour déroulé par opération d'avancement est plus grand que la longueur d'un pas et qu'après l'avancement de la bande 14 d'un pas, ces rouleaux d'introduction 18, 19 patinent sur ladite bande 14 et, par conséquent, lui appliquent une tension, il est avantageux de procéder à une découpe partielle configurative des étiquettes seulement après leur passage entre les rouleaux d'introduction 18, 19. En effet, c'est sur le trajet entre les rouleaux d'introduction et l'ouverture d'accès 11 que la bande à étiquettes 14 n'est exposée à aucun effort de traction, mais seulement à un effort de poussée lors de l'avancement de la bande à étiquettes 14.

Selon un mode de réalisation avantageux, est prévue entre la paire de rouleaux d'introduction 18, 19 et la fente de guidage 17 et plus précisément dit, la face inférieure 1b du bloc de moule 1, une unité d'estampage partiel 45 comprenant un poinçon d'estampage 45a et une matrice 45b coopérant avec ledit poinçon 45a et raccordée à un tuyau d'évacuation de déchets 46 qui est courbé vers le bas et débite dans un réceptacle à déchets 47 disposé en dessous dudit tuyau d'évacuation 46. Les formes des découpes de la bande à étiquettes 14 peuvent être diverses. A titre d'exemple, on a représenté, sur la figure 7, des découpes en forme de triangle 48 ou de rubans étroits 49. Dans tous les cas, une zone d'attache non découpée 50 subsiste entre deux découpes latérales 48 ou 49, de façon à garantir l'adhésion entre les étiquettes successives 13 de la bande 14. Bien entendu, la zone d'attache 50 sera détruite ultérieurement au niveau de l'ouverture d'accès 11, par exemple à l'aide des arêtes coupantes 37, 38 du piston poussoir 36 et de l'embouchure 16 respectivement.

Selon un autre mode de réalisation de l'invention représenté sur le côté gauche de la figure 1, on utilise comme moyen de séparation d'étiquette un couteau plat horizontal 51 logé dans une fente horizontale de passage 52 ménagée dans la paroi latérale 10 du bloc de moule 1, débouchant dans l'ouverture d'accès 11 au ras de la face horizontale inférieure 11c de celle-ci et coopérant avec l'arête antérieure 38 de l'embouchure supérieure 16 de la fente de guidage 17, cette arête antérieure 38 agissant en tant que contre-lame. Dans ce cas, il n'y a pas de piston poussoir et l'on ne procédé à la découpe finale de l'étiquette 13 qu'après que celle-ci ait été saisie partiellement par la matière thermoplastique du récipient en cours de thermoformage. Pour ne pas gêner le démoulage du récipient, la largeur de la face supérieure 11a de l'ouverture d'accès 11 est assez faible. Dans certains cas, cette face supérieure 11a peut même être supprimée, de sorte que la face de fond 11e de l'ouverture d'accès 11 se raccorde directement à la face latérale 12 de la chambre de formage 7.

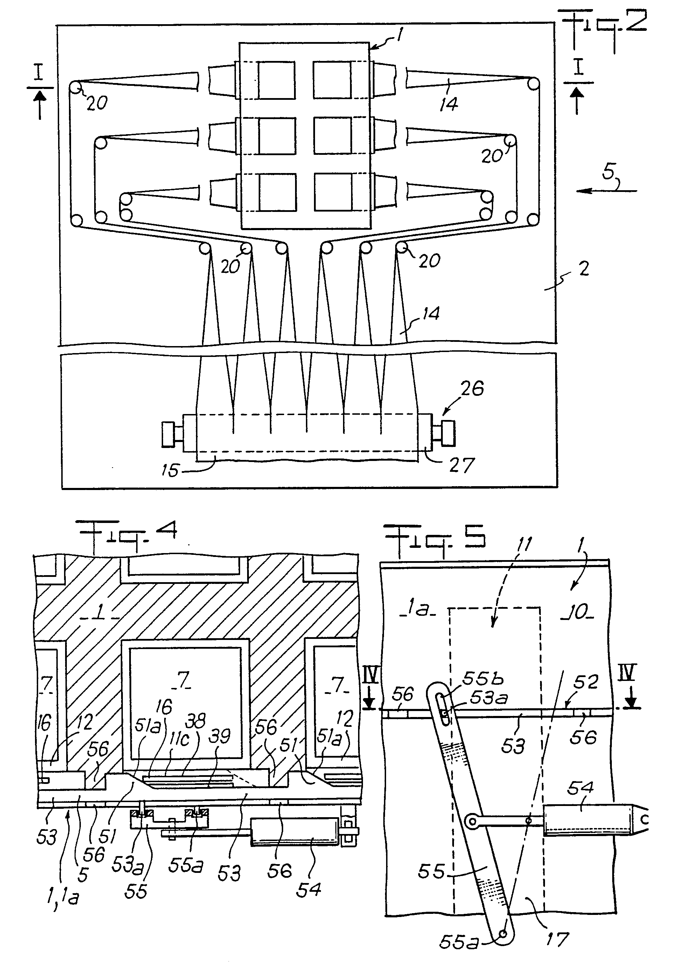

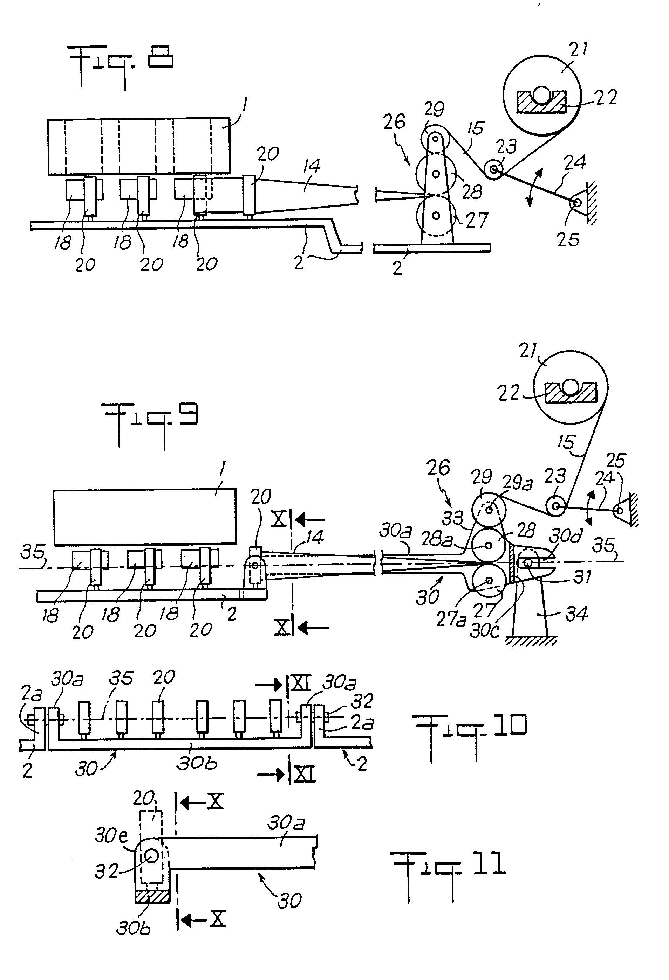

Comme on peut le voir plus particulièrement sur les figures 4 et 5, les différents couteaux 51 sont associés chacun à une ouverture d'accès 11 et une embouchure 16, et présentent chacun un tranchant 51a qui s'étend obliquement par dessus la contre-lame 38 constituée par ladite embouchure 16 de la fente de guidage 17, tout en restant légèrement en retrait par rapport à la face latérale 12 de la chambre de formage 7. Les différents couteaux 51 sont reliés entre eux par un plat 53 coulissant longitudinalement dans la fente de passage 52, de sorte que chacun desdits couteaux 51 puisse se déplacer sur toute la longueur de l'embouchure 16. Un aimant permanent 39 est prévu devant chaque embouchure 16, de sorte que le plat 53, et par conséquent et surtout, les couteaux 51 qui lui sont solidaires sont appliqués contre la face inférieure horizontale 11c de l'ouverture d'accès 11 et contre la contre-lame 38. Le déplacement longitudinal des couteaux 31 et du plat 53 dans la fente de passage 52 est commandé à partir d'un vérin à double effet 54 articulé, d'une part, sur la face verticale 1a du bloc de moule 1 et d'autre part, sur la partie médiane d'un levier 55 qui par son extrémité inférieure, est articulé en 55a sur le bloc de moule 1 et comporte à son extrémité supérieure un trou oblong 55b dans lequel est engagé un téton d'articulation et d'entraînement 53a solidaire du plat 53 qui est guidé longitudinalement par des blocs de guidage 56 prévus de part et d'autre dans la fente de passage 52.

Le moyen de séparation d'étiquette, au lieu d'être prévu au niveau de l'embouchure supérieure 16 de la fente de guidage 17, c'est-à-dire au niveau de la face horizontale inférieure 11c de l'ouverture d'accès, pourrait être disposé à un endroit différent se trouvant entre la paire de rouleaux d'introduction 18, 19 et l'embouchure supérieure 1. Dans ce cas, le fond vertical 11e de l'ouverture d'accès 11 se raccorde directement sans interruption à la face postérieure 17a de la fente de guidage 17 (voir figure 6). Il est alors avantageux de procéder à une séparation partielle des étiquettes de la bande à étiquettes aussitôt en aval de la paire de rouleaux d'introduction 18, 19, tout en laissant subsister une zone d'attache de préférence centrale 50 et d'affaiblir cette zone d'attache 50, par exemple par une découpe en traits interrompus 50a, de sorte que cette zone d'attache affaiblie 50a puisse être déchirée par une simple traction longitudinale appliquée à la bande à étiquettes 14, lors de l'opération de démoulage après la fixation de la première étiquette supérieure 13 sur le récipient thermoformé. En effet, c'est pendant le thermoformage du récipient que l'étiquette supérieure se fixe par thermocollage sur le récipient qui se rigidifie lors de sa venue en contact avec la face intérieure froide de la chambre de formage 7. Lors du démoulage, le récipient reste sur la plaque de fond fixe 8, tandis que le bloc de moule 1 avec la bande à étiquettes 14 est abaissé. C'est ce mouvement de descente qui provoque la séparation entre l'étiquette collée sur le récipient et le reste de la bande à étiquettes 14 par déchirement de la zone d'attache affaiblie 50a.

On peut donc prévoir, en aval de la paire de rouleaux d'introduction 18, 19 et en dessous de l'embouchure 16 à une distance correspondant à un pas d'avance ou à un multiple entier du pas d'avance, une unité d'estampage 45 ou de découpe 57 qui réalise non seulement le découpage partiel des étiquettes 13, mais aussi l'affaiblissement supplémentaire de la zone d'attache 50, 50a entre deux étiquettes successives 13. Dans certains cas, il peut être avantageux, et en vue d'éviter le déchirement des étiquettes immédiatement inférieures à celle collée au récipient, de prévoir en dessous de l'embouchure supérieure 16 un piston horizontal de blocage 58 qui débouche dans la fente de guidage 17 et applique la partie supérieure de l'étiquette engagée dans la fente de guidage 17 contre la face opposée antérieure 17b de celle-ci pendant l'opération de démoulage, c'est-à-dire la course de descente du bloc de moule 1.

Il se comprend de soi-même que les différents modes de réalisation décrits et représentés peuvent subir un certain nombre de modifications sans que l'on sorte pour cela du champ de protection défini par les revendications annexées.

## Revendications

1. Procédé de fabrication et de mise en place simultanés de plusieurs étiquettes sur au moins une rangée de récipients thermoformés, et destiné à être appliqué à une installation de thermoformage simultané d'au moins une rangée de récipients, à partir d'une bande thermoplastique, du type comportant un bloc de moule (1) mobile verticalement et muni d'au moins une rangée de chambres de formage (7) ouvertes vers le haut et obturées en bas par un fond (8) lorsque ledit bloc de moule (1) se trouve en position haute de thermoformage; procédé selon lequel:

—on utilise autant de bande individuelles à étiquettes (14) qu'il y a de récipients par rangée de récipients à thermoformer simultanément dans lesdites chambres de formage (7);

—on détache au moins partiellement une étiquette (13) de chaque bande individuelle (14);

—on transporte chaque étiquette (13) au moins partiellement détachée dans la chambre de formage correspondante (7) à travers une ouverture d'accès (11) d'un pourtour qui est homothétique et légèrement supérieur à celui de l'étiquette, est pratiquée dans la paroi latérale (10) de chaque chambre de formage (7) et débouche sur la face latérale intérieure (12) de ladite chambre (7), paroi (10) alignée avec celle des autres chambres (7) de la même rangée de chambres; et

—on maintient l'étiquette (13) au voisinage de la face latérale intérieure (12) de la chambre de formage (7) jusqu'à ce qu'elle soit attachée au récipient lors du thermoformage de celui-ci, caractérisé en ce que:

—l'on découpe les bandes individuelles à étiquettes (14) d'une bande-mère (15) en une largeur identique à celle de l'étiquette (13) et l'on détermine la longueur du pas d'avance de chaque bande individuelle (14) à l'endroit de la découpe longitudinale de la bande-mère (15) en bandes individuelles (14) tout en maintenant tendue chaque bande individuelle (14) au moins entre deux pas d'avance successifs;

—on maintient constante la longueur des tronçons de chaque bande individuelle (14) comprise entre l'endroit de découpe longitudinale (26) et l'entrée de la bande individuelle (14) dans l'ouverture d'accès (11) de la chambre de formage correspondante (7) malgré le déplacement vertical du bloc de moule (1) muni desdites chambres (7);

—on guide le tronçon de bande en aval d'une paucdsde rouleaux d'introduction (18, 19) disposée en dessous d'une paroi extérieure longitudinale (1a) du bloc de moule (1) au niveau d'une chambre de formage (7), à travers une fente de guidage verticale (17) débouchant dans le fond de l'ouverture d'accès (11) et l'on avance l'étiquette (13) jusqu'à ce qu'elle occupe complètement la section verticale de l'ouverture d'accès (11); et

—finalement, on sépare complètement du reste de la bande individuelle (14), le bord inférieur de l'étiquette (13) occupant l'ouverture d'accès (11).

2. Procédé selon la revendication 1, caractérisé en ce que l'on détache l'étiquette (13) complètement de la bande individuelle (14) après l'avoir fixée au moins partiellement sur le récipient en cours de thermoformage.

3. Procédé selon l'une des revendications 1 et 2, caractérisé en ce que l'on détache l'étiquette (13) complètement de la bande individuelle (14) après l'avoir fixée complètement sur le récipient en cours de thermoformage.

4. Procédé selon l'une des revendications 1 à 3, caractérisé en ce que l'on détache l'étiquette (13) complètement de la bande individuelle (14) lors de l'opération de démoulage du récipient thermoformé et muni de ladite étiquette (13).

5. Procédé selon l'une des revendications 1 à 4, caractérisé en ce que l'on introduit l'étiquette (13) dans l'ouverture d'accès (11) seulement en poussant sur la bande à étiquettes (14) à laquelle ladite étiquette (13) est au moins partiellement attachée.

6. Procédé selon l'une des revendications 1 à 5, caractérisé en ce que l'on modifie la configuration des étiquettes (13) par estampage ou découpe partielle de la bande à étiquettes (14) avant leur introduction dans l'ouverture d'accès (11) dans une partie extrême de la bande à étiquettes (14), partie ne subissant que des efforts de poussée lors de l'avance de la bande (14).

7. Procédé selon l'une des revendications 1 à 6, caractérisé en ce que l'on affaiblit la zone d'attache (50, 50a) entre deux étiquettes successives (13) de la bande à étiquettes (14) par estampage ou découpe partielle de la bande à étiquettes, avant leur introduction dans l'ouverture d'accès (11), dans une partie extrême de la bande à étiquettes (14), partie ne subissant que des efforts de poussée lors de l'avance de la bande à étiquettes (14).

8. Dispositif de fabrication et de mise en place d'une étiquette (13) sur un récipient thermoformé à partir d'une bande thermoplastique (3) du type comprenant dans un poste de thermoformage simultané d'au moins une rangée de récipients:

—au moins une rangée de chambres de formage (7) ouvertes vers le haut, associées chacune à un fond (8) séparé de celle-ci et ménagées dans un bloc de moule (1) verticalement mobile par raport au fond de chambre (8) entre une position haute de thermoformage dans laquelle les fonds (8) obturent l'extrémité inférieure desdites chambres (7) et une position basse de démoulage dans laquelle l'ouverture supérieure des chambres (7) se trouve en dessous des fonds (8) et dans laquelle la rangée de récipients thermoformés peut être avancée d'un pas dans une direction perpendiculaire au plan passant par les axes des récipients d'une même rangée de récipients,

—une ouverture d'accès (11) étant pratiquée dans la paroi latérale (10) de chaque chambre de formage (7), paroi (10) alignée avec celle des autres chambres (7) de la même rangée de chambres, de telle sorte que ladite ouverture d'accès (11) débouche sur la face latérale intérieure (12) de ladite chambre (7);

—un plateau de support (2) verticalement mobile supportant le bloc de moule (1) et associé à des moyens de commande lui imprimant un mouvement alternatif vertical entre une position haute de thermoformage et une position basse de démoulage;

—une bande individuelle à étiquettes (14) par chambre de formage (7), cette bande (14) étant guidée sur son trajet vers la chambre de formage (7) à l'aide d'au moins un rouleau de renvoi et de guidage (20) et d'une paire de rouleaux d'introduction (18, 19) disposée en amont de l'ouverture d'accès (11); et

—des moyens de découpe au moins partielle (45 à 47) des étiquettes (13) pour faciliter le détachement des étiquettes de leur bande individuelle (14), caractérisé

—en ce que l'ouverture d'accès (11) présente en coupe verticale un pourtour homothétique et légèrement supérieur à celui d'une étiquette plane (13), comprend une face supérieure (11a) constituant une butée de fin de course pour l'extrémité libre de la bande à étiquettes (14) et est raccordée à l'extérieur au moyen d'une fente de guidage (17) pratiquée dans la paroi latérale (10) du bloc de moule (1), débouchant sur la face inférieure (11c) de l'ouverture d'accès (11) près de la face intérieure (12) de la chambre de formage (7) et destinée à recevoir la partie extrême de la bande individuelle à étiquettes (14);

—que les rouleaux de renvoi (20) et les paires de rouleaux d'introduction (18, 19) sont montés sur le plateau de support (2) du bloc de moule (1), la zone de contact entre les deux rouleaux (18, 19) de chaque paire de rouleaux d'introduction étant prévue en face de l'entrée dans la fente de guidage (17) et en alignement avec celle-ci;

—que les moyens de découpe au moins partielle (45, 47) des étiquettes (13) d'une bande à étiquettes (14) sont prévus dans une zone comprise entre la paire de rouleaux d'introduction (18, 19) et l'embouchure (16) de la fente de guidage dans l'ouverture d'accès (11), et

—qu'il comporte, en outre,

—un rouleau de bande-mère (21) monté dans des paliers à poste fixe (22),

—une unité de découpe longitudinale (26) de la bande-mère (15) en bandes individuelles à étiquettes (14) d'une largeur égale à celle des étiquettes (13),

—un plateau de support (2 ou 30) sur lequel est installé l'unité de découpe longitudinale (26) et qui est monté mobile en synchronisme avec les mouvements de courses verticales du plateau de support (2) du bloc de moule (1), des paires de rouleaux d'introduction (18, 19) et des rouleaux de renvoi et de guidage (20); ainsi qu'

—un rouleau de tension (23) prévu sur le trajet du tronçon de bande-mère (15) entre le rouleau de stockage (21) et l'unité de découpe longitudinale, ce rouleau de tension (23) étant appliqué contre la bande-mère (15) de façon à compenser les variations de longueur dudit tronçon de bande-mère (15) dues aux déplacements de l'unité de découpe longitudinale (26).

9. Dispositif selon la revendication 8, caractérisé en ce que l'unité de découpe longitudinale (26) est disposée sur le plateau de support (2) du bloc de moule (1).

10. Dispositif selon la revendication 8, caractérisé en ce que l'unité de découpe longitudinale (26) est disposée sur un plateau de support (30) indépendant du plateau de support (2) du bloc de moule (1) mais se déplaçant verticalement en synchronisme avec ledit plateau (2).

11. Dispositif selon la revendication 8, caractérisé en ce que l'unité de découpe longitudinale (26) et la première rangée de rouleaux de renvoi et de guidage (20) en aval de ladite unité (26) sont montés sur un plateau de support (30) présentant la forme générale d'un cadre mobile à la fois en pivotement autour d'un axe horizontal fixe 31 situé à l'arrière et au voisinage de l'unité de découpe longitudinale (26) et en translation parallèlement à son étendue longitudinale, l'extrémité frontale dudit cadre (30) située au voisinage du bloc de moule (1) étant articulée sur le plateau de support (2) de ce dernier à l'aide d'axes d'articulation (32).

12. Dispositif selon la revendication 11, caractérisé en ce que l'axe d'articulation (31) de l'extrémité arriére du cadre de support (30) est monté dans un palier fixe (34) et se trouve dans un plan horizontal (35) contenant également la partie médiane des rouleaux verticaux de renvoi (20) et les axes d'articulation (32) entre le plateau de support (2) et le cadre de support (30) lorsque le bloc de moule (1) se trouve à mi-distance entre sa position haute de thermoformage et sa position basse de démoulage.

13. Dispositif selon l'une des revendications 8 à 12, caractérisé en ce que l'ouverture d'accès (11) comporte un prolongement qui débouche sur la face latérale extérieure (1a) du bloc de moule (1) et comporte un piston poussoir (36) l'arête frontale inférieure (37) est coupante et est susceptible de coopérer avec l'arête opposée (38) de l'embouchure (16) de la fente de guidage (17).

14. Dispositif selon l'une des revendications 8 à 13, caractérisé en ce qu'entre la paire de rouleaux d'introduction 18, 19 et la fente de guidage (17) est prévue une unité d'estampage ou de découpe partiel (45 à 47) de la bande à étiquettes (14).

15. Dispositif selon l'une des revendications 8 à 12, caractérisé en ce qu'un couteau plat horizontal (51) est logé dans une fente horizontale de passage (52) ménagée dans la paroi latérale (10) du bloc de moule (1), débouchant dans l'ouverture d'accès (11) au ras de la face horizontale inférieure (11c) de celle-ci et coopérant avec l'arête antérieure (38) de l'embouchure supérieure (16) de la fente de guidage (17) pour séparer de la bande à étiquettes (14) l'étiquette (13) contenue dans l'ouverture d'accès (11).

16. Dispositif selon la revendication 15, caractérisé en ce que les couteaux horizontaux (51) comportent chacun un tranchant oblique (51a) et sont reliés entre eux par un plat (53) coulissant longitudinalement dans la fente de passage (52).

17. Dispositif selon l'une des revendications 8 à 16, caractérisé en ce que le fond vertical (11e) de l'ouverture d'accès (11) se raccorde directement sans interruption à la face postérieure (17a) de la fente de guidage (17).

18. Dispositif selon l'une des revendications 8 à 17, caractérisé en ce qu'un piston de blocage (58) est prévu en dessous de l'embouchure supérieure (16) de la fente de guidage (17), ce piston débouchant dans celle-ci et étant susceptible d'appliquer la partie supérieure de l'étiquette (13) engagée dans ladite fente (17) contre la face opposée antérieure (17b) de celle-ci.

19. Dispositif selon l'une des revendications 8 à 18, caractérisé en ce que les bords latéraux du piston poussoir (36) sont munis de glissières de guidage (40).

**Patentansprüche**

1. Verfahren zum gleichzeitigen Herstellen und Abringen mehrerer Etiketts auf wenigstens einer Reihe warmgeformter Behälter und dazu bestimmt, in einer Vorrichtung für die gleichzeitige Warmformung von wenigstens einer Behälterreihe aus einem thermoplastischen Streifen mit einem senkrecht beweglichen Formblock (1) angewendet zu werden, der mit wenigstens einer Reihe von Formkammern (7) ausgestattet ist, die nach oben offen und nach unten durch einen Boden (8) verschlossen sind, wenn sich der Formblock (1) in hoher Warmformstellung befindet, wobei in diesem Verfahren

ebensoviele Einzelstreifen mit Etiketten (14) verwendet werden, wie es Behälter je Behälterreihe zum gleichzeitigen Warmformen in Formkammern (7) gibt,

ein Etikett (13) jedes Einzelstreifens (14) wenigstens teilweise abgetrennt wird,

jedes wenigstens teilweise abgetrennte Etikett (13) in die entsprechende Formkammer (7) quer zur Eingangsöffnung (11) mit einem Umfang transportiert wird, der ähnlich und etwas größer als der des Etiketts ist, die an der Seitenwand (10) jeder Formkammer (7) angebracht ist und auf die innere Seitenfläche (12) dieser Kammer (7) mündet, wobei die Wand (10) mit derjenigen der anderen Kammern (7) derselben Kammernreihe fluchtet, und

das Etikett (13) in Nachbarschaft zur inneren Seitenfläche (12) der Formkammer (7) gehalten wird, bie es an den Behälter während dessen Warmformung angebracht wird, dadurch gekennzeichnet, dadurch gekennzeichnet,

daß die Einzelstreifen mit Etiketten (14) von einem Mutterstreifen (15) in einer Breite abgeschnitten werden, die identisch mit der des Etiketts (13) ist, und die Länge des Vorschubschrittes jedes Einzelstreifens (14) an der Stelle des Längschnitts jedes Mutterstreifens (15) in Einzelstreifen (14) festgelegt wird, alles indem jeder Einzelstreifen zwischen wenigstens zwei Vorschubschritten gespannt gehalten wird,

daß die Länge der Abschnitte jedes Einzelstreifens (14) konstant gehalten wird zwischen dem Ort des Längsschnitts (26) und dem Eintritt des Einzelstreifens (14) in die Eingangsöffnung (11) der entsprechenden Formkammer (7) trotz des vertikalen Versetzens des mit diesen Kammern (7) ausgestatteten Formblocks (1),

daß der Streifenabschnitt unterhalb von einem Paar Einführwalzen (18, 19), die unterhalb einer Außenlängswand (1a) des Formblockes (1) auf dem Niveau einer Formkammer (7) angeordnet sind, quer zu einem vertikalen Führungsschlitz (17) geführt wird, der in den Boden der Eingangsöffnung (11) mündet, und

daß das Etikett (13) vorgeschoben wird, bis es den vertikalen Abschnitt der Eingangsöffnung (11) vollständig einnimmt, und

daß schließlich der untere Rand des Etiketts (13), während es die Eingangsöffnung (11) einnimmt, vollständig vom Rest des Einzelstreifens (14) getrennt wird.

2. Verfahren nach Anspruch 1, dadurch gekennzeichnet, daß das Etikett (13) vollständig vom Einzelstreifen (14) abgetrennt wird, nachdem es wenigstens teilweise am Behälter im Verlauf der Warmformung befestigt worden ist.

3. Verfahren nach Anspruch 1 oder 2, dadurch gekennzeichnet, daß das Etikett (13) vollständig vom Einzelstreifen (14) angetrennt wird, nachdem es am Behälter im Verlauf der Warmformung vollständig befestigt worden ist.

4. Verfahren nach einem der Ansprüche 1 bis 3, dadurch gekennzeichnet, daß das Etikett (13) vollständig vom Einzelstreifen (14) während des Ausformprozesses des warmgeformten Behälters abgetrennt und der Behälter mit diesem Etikett (13) ausgestattet wird.

5. Verfahren nach einem der Ansprüche 1 bis 4, dadurch gekennzeichnet, daß das Etikett (13) in die Eingangsöffnung (11) eingeführt wird, indem nur auf den Etikettenstreifen (14) gedrückt wird, an welchem dieses Etikett (13) wenigstens teilweise befestigt ist.

6. Verfahren nach einem der Ansprüche 1 bis 5, dadurch gekennzeichnet, daß die Gestalt der Etiketten (13) durch Stanzen verändert wird oder sie vom Etikettenstreifen (14) vor ihrem Einführen in die Eingangsöffnung (11) zu einem äußersten Abschnitt des Etikettenstreifens (14) teilweise abgeschnitten werden, wobei der Abschnitt während des Vorschubs des Streifens (14) nur Stoßkräften ausgesetzt ist.

7. Verfahren nach einem der Ansprüche 1 bis 6, dadurch gekennzeichnet, daß der Befestigungsbereich (50, 50a) zwischen zwei aufeinanderfolgenden Etiketten (13) des Etikettenstreifens (14) durch Stanzen geschwächt wird oder die Etiketten vor dem Einführen in die Eingangsöffnung (11) zu einem äußersten Abschnitt des Etikettenstreifens (14) teilweise vom Etikettenstreifen abgeschnitten werden, wobei der Abschnitt während des Vorschubs des Eitkettenstreifens (14) nur Stoßkräften ausgesetzt ist.

8. Vorrichtung zum Herstellen und Anbringen eines Etiketts (13) auf einem warmgeformten Behälter aus einem thermoplastischen Streifen (3) mit einer gleichzeitigen Warmverformungsstelle von wenigstens einer Behälterreihe mit wenigstens einer Reihe von nach oben offenen Formkammern (7), die jede mit einem Boden (8) vereint ist, der von ihr getrennt ist, und in einem Formblock (1) vertikal beweglich in Bezug auf den Kammerboden (8) geführt wird zwischen einer oberen Warmformungsstellung, in der die Böden (8) das innere Ende dieser Kammern (7) absperren, und einer unteren Ausformstellung, in der die obere Öffnung der Kammern (7) sich unter den Böden (8) befindet und in der Reihe der warmgeformten Behälter um einen Schritt in eine Richtung vorgerückt werden kann, die senkrecht zu der Ebene ist, die durch die Achsen der Behälter derselben Behälterreihe geht, wobei eine Eingangsöffnung (11) in der Seitenwand (10) jeder Formkammer (7) angebracht und die Wand (10) mit der der anderen Kammern (7) derselben Kammernreihe derart ausgerichtet ist, daß diese Eingangsöffnung (11) auf die Innenseitenfläche (12) dieser Kammer (7) mündet;

einer senkrecht beweglichen Stützplatte (2), die den Formblock (1) trägt und mit Betätigungsmitteln vereint ist, die ihr eine hin- und hergehende vertikale Bewegung zwischen einer oberen Warmformungsstellung und einer unteren Ausformstellung verleihen;

einem Einzelstreifen mit Etiketten (14) je Formkammer (7), wobei dieser Streifen (14) auf seinem Weg zur Formkammer (7) mit Hilfe wenigstens einer Vorgelege- und Führungswalze (20) und einem Paar von Einführungswalzen (18, 19) geführt wird, die am Beginn der Eingangsöffnung (11) angeordnet sind, und Mitteln zum wenigstens teilweisen Abschneiden (45 bis 47) der Etiketten (13), um das Abtrennen der Etiketten von ihrem Einzelstreifen (14) zu erleichtern, dadurch gekennzeichnet,

daß die Eingangsöffnung (11) im Vertikalschnitt einen ähnlichen und etwas größeren Umfang gegenüber dem eines flachen Etiketts (13) aufweist mit einer oberen Fläche (11a), die einen Wegenden-Anschlag für das freie Ende des Streifens mit Etiketten (14) bildet und nach außen mittels eines Führungsschlitzes (17) angeschlossen ist, der in der Seitenwand (10) des Formblokkes (1) angebracht ist, auf die Innenfläche (11c) der Eingangsöffnung (11) nahe der Innenfläche (12) der Umformkammer (7) mündet und dazu bestimmt ist, den letzten Abschnitt des Einzelstreifens mit Etiketten (14) aufzunehmen,

daß die Vorgelegewalzen (10) und die Einführungs-Wälzenpaare (18, 19) auf der Stützplatte (2) des Formblocks (1) angebracht sind, wobei der Berührungsbereich zwischen den beiden Walzen (18, 19) jedes Einführungs-Walzenpaares gegenüber dem Eintritt in den Führungsschlitz (17) und mit diesem in Flucht vorgesehen ist,

daß die Mittel zum wenigstens teilweisen Abschneiden (45, 57) der Etiketten (13) von einem Streifen mit Etiketten (14) in einem Bereich vorgesehen sind, der zwischen dem Einführungs-Walzenpaar (18, 19) und der Einmündung (16) des Führungsschlitzes in die Eingangsöffnung (11) liegt, und

daß die Vorrichtung außerdem folgende Teile aufweist:

eine Mutterstreifen-Walze (21), die in Festlagern (22) montiert ist,

eine Längsschnitt-Anlage (26) des Mutterstreifens (15) in Einzelstreifen mit Etiketten (14) mit einer Breite gleich der der Etiketten (13),

eine Stützplatte (2 oder 30), auf der die Längsschnitt-Anlage installiert ist und die beweglich im Synchronlauf mit den Bewegungen des vertikalen Weges der Stützplatte (2) des Formblocks (1), der Einführungs-Walzenpaare (18, 19) und der Vorgelege- und Führungswalzen (20) angebracht ist, ebenso eine Spannwalze (23) auf dem Streckenabschnitt vom Mutterstreifen (15) zwischen der Speicherungswalze (21) und der Längsschnitt-Anlage, wobei diese Spannwalze (23) gegen den Mutterstreifen (15) angewendet wird, um die durch die Verstellungen der Längschnitt-Anlage (26) verursachten Längenänderungen dieses Mutterstreifen-Abschnittes (15) auszugleichen.

9. Vorrichtung nach Anspruch 8, dadurch gekennzeichnet, daß die Längsschnitt-Anlage (26) auf der Stützplatte (2) des Formblockes (1) angeordnet ist.

10. Vorrichtung nach Anspruch 8, dadurch gekennzeichnet, daß die Längsschnitt-Anlage (26) auf einer Stützplatte (30) unabhängig von der Stützplatte (2) des Formblockes (1) angeordnet ist, aber sich im Synchronlauf mit dieser Platte (2) senkrecht verstellt.

11. Vorrichtung nach Anspruch 8, dadurch gekennzeichnet, daß die Längsschnitt-Anlage (26) und die erste Reihe von Vorgelege- und Führugswalzen (20) jenseits von dieser Anlage (26) auf einer Stützplatte (30) montiert sind, die die allgemeine Form eines beweglichen Rahmens darstellt, einmal im Schwenken um eine feste Horizontalachse (31), die im hinteren Teil und in Nachbarschaft zur Längsschnitt-Anlage (26) liegt, und dann im Verschieben parallel zu seiner Längserstreckung, wobei das in der Nachbarschaft des Formblocks (1) gelegene Vorderende diese Rahmens (30) an der Stützplatte (2) des Formblockes mittels einer Gelenkachse (32) angelenkt ist.

12. Vorrichtung nach Anspruch 11, dadurch gekennzeichnet, daß die Gelenkachse (31) des hinteren Endes des Stützrahmens (30) in einem Festlager (34) montiert ist und sich in einer Horizontalebene (35) befindet, die in gleicher Weise den in der Mitte liegenden Abschnitt der vertikalen Vorgelegewalzen (20) und die Gelenkachsen (32) zwischen der Stützplatte (2) und dem Stützrahmen (30) aufweist, wenn sich der Formblock (1) in Halbdistanz zwischen seiner oberen Warmformlage und seiner unteren Ausformlage befindet.

13. Vorrichtung nach einem der Ansprüche 8 bis 12, dadurch gekennzeichnet, daß die Eingangsöffnung (11) eine Fortsetzung aufweist, die auf die äußere Seitenfläche (1a) des Formblockes (1) mündet und ein Kolben-Druckscück (36) aufweist, dessen innere frontale Schneide (37) schneidet und geeignet ist, mit der entgegengesetzten Schneide (38) der Mündung (16) des Führungsschlitzes (17) zusammenzuarbeiten.

14. Vorrichtung nach einem der Ansprüche 8 bis 13, dadurch gekennzeichnet, daß zwischen dem Paar Einführungswalzen (18, 19) und dem Führungsschlitz (17) eine Stanz- oder teilweise Abtrennanlage (45 bis 47) des Streifens mit Etiketten (14) vorgesehen ist.

15. Vorrichtung nach einem der Ansprüche 8 bis 12, dadurch gekennzeichnet, daß ein horizontales flaches Messer (51) in einem horizontalen Durchgangsschlitz (52) angebracht ist, der in der Seitenwand (10) des Formblocks (1) ausgespart ist, in die Eingangsöffnung (11) in gleicher Höhe mit deren innerer horizontalen Fläche (11c) führt und mit der vorhergehenden Schneide (38) der größeren Mündung (16) des Führungsschlitzes (17) zusammenarbeitet, um von dem Streifen mit Etiketten (14) das Etikett (13) abzutrennen, das sich in der Eingangsöffnung (11) befindet.

16. Vorrichtung nach Anspruch 15, dadurch gekennzeichnet, daß jedes der horizontalen Messer (51) eine schiefe Schneide (51a) aufweist und sie untereinader durch eine Platte (53) verbunden sind, die in längsrichtung in dem Durchgangsschlitz (52) gleitet.

17. Vorrichtung nach einem der Ansprüche 8 bis 16, dadurch gekennzeichnet, daß der vertikale Boden (11e) der Eingangsöffnung (11) sich direkt ohne Unterbrechung an die hintere Fläche (17a) des Führungsschlitzes (17) anschließt.

18. Vorrichtung nach einem der Ansprüche 8 bis 17, dadurch gekennzeichnet, daß ein Sperrkolben (58) unterhalb der größeren Mündung (16) des Führungsschlitzes (17) vorgesehen ist, in den dieser Kolben einmündet und der fähig ist, den oberen Abschnitt des Etiketts (13), das in den Schlitz hineingezogen ist, gegen dessen vorherige entgegengesetzte Fläche (17b) anzulegen.

19. Vorrichtung nach einem der Ansprüche 8 bis 18, dadurch gekennzeichnet, daß die seitlichen Ränder des Kolben-Druckstücks (36) mit Führungs-Gleitfläche (40) versehen sind.

**Claims**

1. Method for simultaneously producing and positioning a plurality of labels on at least one row of thermoformed containers, and designed to be applied to a simultaneous thermoforming installation of at least one row of containers, from a thermoplastic band, of the type comprising a vertically movable molding unit (1) provided with at least one row of forming chambers (7) open upwardly and closed at their lower part by a bottom (8) when said molding unit (1) is in high thermoforming position, method consisting in:

—using as many individual label bands (14) as there are containers per row of containers to be thermoformed simultaneously in the forming chambers (7);

—detaching at least partly a label (13) from each individual band (14);

—transporting each at least partly detached label (13) to the corresponding forming chamber (7) through an access opening (11) the outline of which is homothetic to and slightly greater than that of the label and which is provided in the lateral wall (10) of each forming chamber (7), and issues onto the inner lateral face (12) of said chamber (7) said lateral wall (10) which is in alignment with that of the other chambers (7) in the same row of chambers; and

—keeping the label (13) close to the inner lateral face (12) of the forming chamber (7) until said label is attached to the container during the container thermoforming operation, characterized in that:

—the individual label bands (14) are cut from a master band (15) into a width identical to the width of the label (13), and the length of a one-step motion of each individual band (14) is determined where the master band (15) is cut longitudinally into individual bands (14), while every individual band (14) is kept tensioned at least between two successive one-step motions;

—the length of each individual band portion (14) comprised between the longitudinal cutting area (26) and the place of introduction of the individual band (14) in the access opening (11) of the corresponding forming chamber (7) is kept constant despite the vertical displacement of the molding unit equipped (1) with said chambers (7);

—the band portion is guided downstream of a pair of introduction rollers (18, 19) provided over a longitudinal outer wall (1a) of the molding unit (1) at the level of a forming chamber (7), through a vertical guiding slot (17) opening into the bottom of the access opening (11), then the label (13) is moved forward until it occupies the whole vertical section of the access opening (11); and

—finally, the lower edge of the label (13) occupying the access opening (11) is completely separated from the rest of the individual band (14).

2. Method according to claim 1, characterized in that the label (13) is completely detached from the individual band (14) after being fixed at least partly on the container being formed.

3. Method according to one of claims 1 and 2, characterized in that the label (13) is completely detached from the individual band (14), after being fixed completely on the container being formed.

4. Method according to one of claims 1 to 3, characterized in that the label (13) is completely detached from the individual band (14) during the stripping of the container thermoformed and equipped with said label (13).

5. Method according to one of claims 1 to 4, characterized in that the label (13) is introduced in the access opening (11) only by pushing the label band (14) to which said label (13) is at least partly attached.

6. Method according to one of claims 1 to 5, characterized in that the configuration of the labels (13) is modified by stamping or partial cutting of the label band (14), before their introduction into the access opening (11), in an extreme portion of the label band (14), which portion is only subjected to thrusting stresses when the label band (14) is moved forward.

7. Method according to one of claims 1 to 6, characterized in that two successive labels (13) of a label band (14) have an attachment zone (50, 50a) which is weakened by stamping or partial cutting of the label band, before the labels are introduced into the access opening (11), in an extreme portion of the label band (14), which portion is only subjected to the thrusting stresses when the label band (14) is moved forward.

8. Device for the production and positioning of a label (13) on a thermoformed container, using a thermoplastic band (3), of the type comprising, inside a thermoformed station where at least one row of containers are simultaneously thermoformed:

—at least one row of upwardly open forming chambers (7), each chamber being associated to a bottom (8) separate thereof, and being provided in a molding unit (1) which is vertically movable, with respect to the bottom of the chamber (8), between a high thermoforming position in which the bottoms (8) close off the lower end of the chambers (7) and a low stripping position in which the top opening of the chambers (7) is situated under the bottoms (8), and in which the row of thermoformed containers can be moved one step in a direction perpendicular to the plane containing the axes of the containers of one container row, one access opening (11) being provided in the lateral wall (10) of each forming chamber (7) said lateral wall (10) being aligned with the wall of the other chambers (7) in the same row of chambers, so that said access opening (11) issues onto the inner lateral wall (12) of said chamber (7);

—a vertically movable supporting table (2), supporting the molding unit (1) and being associated with control means for imparting a vertical reciprocating movement thereto between a high thermoforming position and a low stripping position;

—one individual band of labels (14) for every forming chamber (7), which band (14) is guided on its path towards the forming chamber (7) by at least one return and guiding roller (20) and one pair of introduction rollers (18, 19) placed upstream of the access opening (11); and

—means of cutting, at least partly (45 to 47), the labels (13) in order to detach them from their individual band (14), characterized in that:

—the access opening (11) has, in vertical section, an outline which is homothetic to and slightly greater than that of a flat label (13), said opening comprising an upper face (11a) which constitutes an end-of-run abutment or stop for the free end of the label band (14) and being connected with the outside via a guiding slot (17) provided in the lateral wall (10) of the molding unit (1), issuing onto the lower face (11c) of said access opening (11) close to the inner face (12) of the forming chamber (7) and designed to receive the outermost part of the individual label band (14);

—the return rollers (20) and the pairs of introduction rollers (18, 19) are mounted on the supporting table (2) of the molding unit (1), the contact zone between the two rollers (18, 19) of each pair of introduction rollers being situated opposite the inlet into the guiding slot (17) and being aligned therewith;

—the means (45, 57) for at least partly cutting labels (13) from a band of labels (14) are provided in a zone situated between the pair of introduction rollers (18, 19) and the aperture (16) of the slot guiding the band into the access opening (11); and in that it further comprises:

—a storage roll (21) of master-band mounted in fixed bearings (22),

—a cutting unit for longitudinal cutting (26) of the master-band (15) into individual label bands (14) of width equal to the width of the labels (13),

—a supporting table (2 or 30) on which is installed the longitudinal cutting unit (26), which table is mounted for moving synchronous with the vertical displacements of the table (2) supporting the molding unit (1), of the introduction rollers (18, 19) and of the guiding and return rollers (20), as well as,

—a tension roller (23) provided on the path of the portion of master band (15) between the storage roller (21) and the longitudinal cutting unit, said tension roller (23) being applied against the master band (15) so as to compensate the length variations of said portion of master band (15) which are due to the displacement of the longitudinal cutting unit (26).

9. Device according to claim 8, characterized in that the longitudinal cutting unit (26) is situated on the supporting table (2) of the molding unit (1).

10. Device according to claim 8, characterized in that said longitudinal cutting unit (26) is placed on a supporting table (30) which is separate from the table (2) supporting the molding unit (1) but which moves vertically in synchronism with said table (2).

11. Device according to claim 8, characterized in that the longitudinal cutting unit (26) and the first row of guiding and return rollers (20) situated downstream of said unit (26) are mounted on a supporting table (30) which is in the general shape of a frame, movable, in rotation, about a fixed horizontal pin (31) situated at the rear of and close to the longitudinal cutting unit (26), and in translation in parallel to its longitudinal extending direction, the front end of said frame (30), situated close to the molding unit (1), being articulated on the supporting table (2) of the latter, by means of articulation pins (32).

12. Device according to claim 11, characterized in that the articulation pin (31) of the rear end of the supporting frame (30) is mounted in a fixed bearing (34) and is situated inside a horizontal plane (35) which also contains the middle part of the vertical return rollers (20) and the articulation pins (32) between the supporting table (2) and tpe supporting frame (30) when the molding unit (1) is half-way between its high thermoforming position and its low stripping position.

13. Device according to one of claims 8 to 12, characterized in that the access opening (11) comprises an extension which issues onto the external lateral face (1a) of the molding unit (1) and comprises a plunger piston (36) of which the lower frontal edge (37) is a cutting edge and is adapted to cooperate with the opposite edge (38) of the aperture (16) of the guiding slot (17).

14. Device according to one of claims 8 to 13, characterized in that a stamping or partial cutting unit (45 to 47) of the label band (14) is provided between the pair of introduction rollers (18, 19) and the guiding slot (17) for the partial stamping or cutting of the label band (14).

15. Device according to one of claims 8 to 12, characterized in that a horizontal cutter (51) is housed in a horizontal slot (52) provided in the lateral wall (10) of the molding unit (1) and issues into the access opening (11) flush with the lower horizontal face (11c) thereof, said horizontal slot cooperating with the front edge (38) of the top aperture (16) of the guiding slot (17) for separating from the label band (13), the label (13) contained in the access opening (11).

16. Device according to claim 15, characterized in that said horizontal cutters (51) are each provided with an oblique cutting edge (51a) and are interconnected by a flat piece (53) sliding longitudinally in said horizontal slot (52).

17. Device according to one of claims 8 to 16, characterized in that the vertical bottom (11e) of the access opening (11) is directly joined without any discontinuity to the rear face (17a) of the guiding slot (17).

18. Device according to one of claims 8 to 17, characterized in that a blocking piston (58) is provided under the upper aperture (16) of said guiding slot (17), said piston issuing thereinto and being adapted to apply the upper part of the label (13) engaged in said slot (17) against the opposite front face (17b) of the latter.

19. Device according to one of claims 8 to 18, characterized in that the lateral edges of the plunger piston (36) are equipped with guide rails (40).

Fig.1

Fig.6

Fig.7

Fig.3

Fig.2

Fig.4

Fig.5

Fig. 8

Fig. 9

Fig. 10

Fig. 11